# EUROPEAN PATENT APPLICATION

(11) **EP 4 535 900 A1**
(43) Date of publication of application: **09.04.2025**
(21) Application number: 23829978.8
(22) Date of filing: 14.06.2023
(51) Int. Cl.: H04W 72/04

(54) **COMMUNICATION METHOD AND COMMUNICATION APPARATUS**

(30) Priority: 29.06.2022 CN 202210753383
(71) Applicant: Huawei Technologies Co., Ltd., Shenzhen, Guangdong 518129 (CN)
(72) Inventor: ZHAI, Bangzhao, Shenzhen, Guangdong 518129 (CN); XUE, Songyan, Shenzhen, Guangdong 518129 (CN); DING, Mengying, Shenzhen, Guangdong 518129 (CN); LI, Xinxian, Shenzhen, Guangdong 518129 (CN); PENG, Jinlin, Shenzhen, Guangdong 518129 (CN)
(74) Representative: Pfenning, Meinig & Partner mbB
(86) International application number: PCT/CN2023/100285
(87) International publication number: WO 2024/001796

(57) **Abstract**

This application provides a communication method and a communication apparatus. The method includes: A terminal device receives first information from a network device, where the first information is used to configure M communication parameter groups corresponding to N candidate carriers. Then, the terminal device receives second information from the network device, where the second information indicates at least one communication parameter group in the M communication parameter groups. The terminal device performs communication on at least one carrier based on the at least one communication parameter group. This improves flexibility of changing a communication mode of the terminal device, and reduces a delay of changing the communication mode.

## Description

This application claims priority to Chinese Patent Application No. 202210753383.4, filed with the China National Intellectual Property Administration on June 29, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With wide application of wireless communication, in a wireless communication system, a plurality of communication modes are designed to meet increasing wireless transmission requirements. For example, a multi-carrier carrier aggregation (carrier aggregation, CA) communication mode may be used to increase a transmission bandwidth and improve a data transmission rate, and a communication mode in which a plurality of transmission points perform joint transmission may be used to improve communication reliability.

Currently, a network device may configure a communication mode that meets a communication capability of a terminal device for the terminal device based on the communication capability of the terminal device, and the terminal device performs communication in the communication mode based on the configuration. However, when the network device configures or reconfigures the communication mode for the terminal device via a radio resource control (radio resource control, RRC) message, a delay from time when the communication mode is configured to time when the communication mode takes effect is large. Consequently, it is unable to dynamically adapt to changes of a channel and load in time.

### SUMMARY

Embodiments of this application provide a communication method and a communication apparatus, to improve flexibility of changing a communication mode of a terminal device, and reduces a delay of changing the communication mode.

According to a first aspect, a communication method is provided. The method may be performed by a terminal device or a module (for example, a chip) configured in (or used in) a terminal device.

The method includes: receiving first information from a network device, where the first information is used to configure M communication parameter groups corresponding to N candidate carriers, N is an integer greater than or equal to 1, and M is greater than or equal to N; receiving second information from the network device, where the second information indicates at least one communication parameter group in the M communication parameter groups; and performing communication on at least one carrier based on the at least one communication parameter group, where the N candidate carriers include the at least one carrier.

According to the foregoing solution, the network device may configure a plurality of communication parameter groups of at least one candidate carrier for the terminal device, so that the terminal device can learn of a candidate carrier that may be used and a corresponding communication parameter group. The network device may flexibly change a communication mode of the terminal device by indicating the terminal device to use the at least one configured carrier, to adapt to a communication requirement of the terminal device in time, so that a delay of changing the communication mode can be reduced.

With reference to the first aspect, in some implementations of the first aspect, the N candidate carriers belong to K frequency bands, and K is a positive integer. A union set of parameter values of one communication parameter in the M communication parameter groups is greater than a maximum value of the one communication parameter supported by the terminal device in the K frequency bands; and/or a union set of parameter values of the one communication parameter in the at least one communication parameter group is less than or equal to the maximum value of the one communication parameter supported by the terminal device in the K frequency bands.

According to the foregoing solution, a union set of parameter values of one communication parameter in the M communication parameter groups corresponding to the N candidate carriers in the K frequency bands configured by the network device for the terminal device may be greater than a maximum value of communication parameters supported by the terminal device in the K frequency bands, and a union set of parameter values of the communication parameter in communication parameter groups used in actual communication is within a capability range of the terminal device, so that the network device can flexibly change the communication mode of the terminal device within the communication capability range of the terminal device.

With reference to the first aspect, in some implementations of the first aspect, the method further includes:
sending third information to the network device, where the third information indicates a maximum value of at least one communication parameter supported by the terminal device in the K frequency bands, and the communication parameter group includes the at least one communication parameter.

According to the foregoing solution, the terminal device reports a communication capability of the terminal device to the network device in the form of a frequency band combination. In comparison with reporting the communication capability of the terminal device in the form of a carrier, the communication capability of the terminal device can be flexibly allocated to each carrier in the frequency band combination.

With reference to the first aspect, in some implementations of the first aspect, the communication parameter group includes one or more of the following parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

With reference to the first aspect, in some implementations of the first aspect, the second information includes at least one piece of indication information, and one piece of indication information indicates one communication parameter group corresponding to one carrier in the at least one carrier.

According to the foregoing solution, the second information may indicate an activated carrier and a used communication parameter group by indicating the communication parameter group corresponding to the one carrier, so that the terminal device and the network device can reach a consensus.

With reference to the first aspect, in some implementations of the first aspect, the at least one piece of indication information includes first indication information, and the first indication information indicates a first communication parameter group corresponding to a first carrier in the at least one carrier. The performing communication on at least one carrier based on the at least one communication parameter group includes: performing communication on one or more BWPs of the first carrier based on the first communication parameter group.

According to the foregoing solution, the communication parameter group is a carrier-level communication parameter group, and one communication parameter group is applicable to each BWP of a carrier corresponding to the communication parameter group, so that configuration and indication overheads can be reduced.

With reference to the first aspect, in some implementations of the first aspect, one communication parameter group is a communication parameter group corresponding to one BWP of one candidate carrier, the at least one piece of indication information includes the first indication information, the first indication information indicates a first communication parameter group, and the first communication parameter group is a communication parameter group corresponding to a first BWP of a first carrier in the at least one carrier. The performing communication on at least one carrier based on the at least one communication parameter group includes: performing communication on the first BWP based on the first communication parameter group.

According to the foregoing solution, the communication parameter group is a BWP-level communication parameter group, and one communication parameter group is specifically a communication parameter group corresponding to one BWP of one candidate carrier. This can improve flexibility of changing the communication mode of the terminal device.

With reference to the first aspect, in some implementations of the first aspect, the first information is used to configure a plurality of communication modes, and the plurality of communication modes include one or more of a non-coherent joint transmission communication mode, a carrier aggregation communication mode, or a coherent joint transmission communication mode. The M communication parameter groups are communication parameter groups corresponding to the N candidate carriers used in the plurality of communication modes.

According to the foregoing solution, the network device may configure a plurality of communication modes for the terminal device, so that the terminal device can learn of a possible communication mode that may be used, and the network device can flexibly change the communication mode of the terminal device by activating a configured communication mode, to adapt to the communication requirement of the terminal device in time, so that a delay of changing the communication mode can be reduced.

With reference to the first aspect, in some implementations of the first aspect, the second information indicates a first communication mode, and the at least one carrier is a carrier used in the first communication mode. The performing communication on at least one carrier based on the at least one communication parameter group includes: performing communication in the first communication mode based on the at least one communication parameter group.

With reference to the first aspect, in some implementations of the first aspect, the at least one carrier includes the first carrier, and the method further includes:
determining the first communication mode based on a quantity of control resource set pools in a communication parameter group of the first carrier, where the first communication mode is one or more of a non-coherent joint transmission communication mode, a carrier aggregation communication mode, or a coherent joint transmission communication mode; and
the performing communication on the at least one carrier based on a communication parameter group of the at least one carrier includes:
   performing communication in the first communication mode based on the communication parameter group of the at least one carrier.

According to the foregoing solution, the terminal device may specifically determine an activated communication mode based on a quantity of control resource pools in a communication parameter group activated by using the second information.

With reference to the first aspect, in some implementations of the first aspect, the first information is carried in a radio resource control RRC message, and the second information is carried in a medium access control MAC control element CE or downlink control information DCI.

According to a second aspect, a communication method is provided. The method may be performed by a network device or a module (for example, a chip) configured in (or used in) a network device.

The method includes: sending first information to a terminal device, where the first information is used to configure M communication parameter groups of N candidate carriers, N is an integer greater than or equal to 1, and M is greater than or equal to N; and sending second information to the terminal device, where the second information indicates at least one communication parameter group, and the at least one communication parameter group is a communication parameter group corresponding to at least one carrier in the N candidate carriers.

With reference to the second aspect, in some implementations of the second aspect, the N candidate carriers belong to K frequency bands, and K is a positive integer. A union set of parameter values of one communication parameter in the M communication parameter groups is greater than a maximum value of the one communication parameter supported by the terminal device in the K frequency bands; and/or a union set of parameter values of the one communication parameter in the at least one communication parameter group is less than or equal to the maximum value of the one communication parameter supported by the terminal device in the K frequency bands.

With reference to the second aspect, in some implementations of the second aspect, the method further includes:
receiving third information from the terminal device, where the third information indicates a maximum value of at least one communication parameter supported by the terminal device in the K frequency bands, and the communication parameter group includes the at least one communication parameter.

With reference to the second aspect, in some implementations of the second aspect, the communication parameter group includes one or more of the following communication parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

With reference to the second aspect, in some implementations of the second aspect, the second information includes at least one piece of indication information, and one piece of indication information indicates one communication parameter group corresponding to one carrier in the at least one carrier.

With reference to the second aspect, in some implementations of the second aspect, one communication parameter group is a communication parameter group corresponding to one BWP of one candidate carrier, the at least one piece of indication information includes first indication information, the first indication information indicates a first communication parameter group, and the first communication parameter group is a communication parameter group corresponding to a first BWP of a first carrier in the at least one carrier.

With reference to the second aspect, in some implementations of the second aspect, the first information is used to configure a plurality of communication modes, and the plurality of communication modes include one or more of a non-coherent joint transmission communication mode, a carrier aggregation communication mode, or a coherent joint transmission communication mode.

The M communication parameter groups are communication parameter groups corresponding to the N candidate carriers used in the plurality of communication modes.

With reference to the second aspect, in some implementations of the second aspect, the second information indicates a first communication mode, and the at least one carrier is a carrier used in the first communication mode.

With reference to the second aspect, in some implementations of the second aspect, the first information is carried in a radio resource control RRC message, and the second information is carried in a medium access control MAC control element CE or downlink control information DCI.

According to a third aspect, a communication method is provided. The method may be performed by a terminal device or a module (for example, a chip) configured in (or used in) a terminal device.

The method includes: receiving first information from a network device, where the first information is used to configure a plurality of communication modes, and the plurality of communication modes include one or more of a non-coherent joint NCJT communication mode, a carrier aggregation communication mode, or a coherent joint JT communication mode;
receiving second information from the network device, where the second information indicates that a first communication mode in the plurality of communication modes is used; and
performing communication in the first communication mode.

With reference to the third aspect, in some implementations of the third aspect, the first information includes parameter configuration information, the parameter configuration information is used to configure M communication parameter groups of N candidate carriers used in the plurality of communication modes, N and M are positive integers, and M is greater than or equal to N. The second information indicates at least one communication parameter group, the at least one communication parameter group is a communication parameter group corresponding to at least one carrier used in the first communication mode, and the N candidate carriers include the at least one carrier.

The performing communication in the first communication mode includes:
performing communication on the at least one carrier based on the at least one communication parameter group.

According to a fourth aspect, a communication method is provided. The method may be performed by a terminal device or a module (for example, a chip) configured in (or used in) a terminal device.

The method further includes: sending first information to a terminal device, where the first information is used to configure a plurality of communication modes, and the plurality of communication modes include one or more of a non-coherent joint NCJT communication mode, a carrier aggregation communication mode, or a coherent joint JT communication mode; and
sending second information to the terminal device, where the second information indicates a first communication mode in the plurality of communication modes.

With reference to the fourth aspect, in some implementations of the fourth aspect, the first information includes parameter configuration information, the parameter configuration information is used to configure M communication parameter groups of N candidate carriers used in the plurality of communication modes, N and M are positive integers, and M is greater than or equal to N. The second information indicates at least one communication parameter group, the at least one communication parameter group is a communication parameter group corresponding to at least one carrier used in the first communication mode, and the N candidate carriers include the at least one carrier.

According to a fifth aspect, a communication apparatus is provided. In a design, the apparatus may include modules for performing the corresponding method/operations/steps/actions described in the first aspect. The modules may be hardware circuits, may be software, or may be implemented by using a combination of a hardware circuit and software. In a design, the apparatus includes:
a transceiver unit, configured to receive first information from a network device, where the first information is used to configure M communication parameter groups corresponding to N candidate carriers, N is an integer greater than or equal to 1, and M is greater than or equal to N, and
the transceiver unit is further configured to receive second information from the network device, where the second information indicates at least one communication parameter group in the M communication parameter groups; and
a processing unit, configured to control, based on the at least one communication parameter group, the transceiver unit to perform communication on at least one carrier, where the N candidate carriers include the at least one carrier.

With reference to the fifth aspect, in some implementations of the fifth aspect, the N candidate carriers belong to K frequency bands, and K is a positive integer.

A union set of parameter values of one communication parameter in the M communication parameter groups is greater than a maximum value of the one communication parameter supported by a terminal device in the K frequency bands; and/or
a union set of parameter values of the one communication parameter in the at least one communication parameter group is less than or equal to the maximum value of the one communication parameter supported by the terminal device in the K frequency bands.

With reference to the fifth aspect, in some implementations of the fifth aspect, the transceiver unit is further configured to send third information to the network device, where the third information indicates a maximum value of at least one communication parameter supported by the terminal device in the K frequency bands, and the communication parameter group includes the at least one communication parameter.

With reference to the fifth aspect, in some implementations of the fifth aspect, the communication parameter group includes one or more of the following communication parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

With reference to the fifth aspect, in some implementations of the fifth aspect, the second information includes at least one piece of indication information, and one piece of indication information indicates one communication parameter group corresponding to one carrier in the at least one carrier.

With reference to the fifth aspect, in some implementations of the fifth aspect, the at least one piece of indication information includes first indication information, and the first indication information indicates a first communication parameter group corresponding to a first carrier in the at least one carrier. The processing unit is specifically configured to control, based on the first communication parameter group, the transceiver unit to perform communication on one or more BWPs of the first carrier.

With reference to the fifth aspect, in some implementations of the fifth aspect, one communication parameter group is a communication parameter group corresponding to one BWP of one candidate carrier, the at least one piece of indication information includes the first indication information, the first indication information indicates the first communication parameter group, and the first communication parameter group is a communication parameter group corresponding to a first BWP of the first carrier in the at least one carrier. The processing unit is specifically configured to control, based on the first communication parameter group, the transceiver unit to perform communication on the first BWP.

With reference to the fifth aspect, in some implementations of the fifth aspect, the first information is used to configure a plurality of communication modes, and the plurality of communication modes include one or more of a non-coherent joint transmission communication mode, a carrier aggregation communication mode, or a coherent joint transmission communication mode. The M communication parameter groups are communication parameter groups corresponding to the N candidate carriers used in the plurality of communication modes.

With reference to the fifth aspect, in some implementations of the fifth aspect, the second information indicates a first communication mode, and the at least one carrier is a carrier used in the first communication mode. The processing unit is specifically configured to control, based on the at least one communication parameter group, the transceiver unit to perform communication in the first communication mode.

With reference to the fifth aspect, in some implementations of the fifth aspect, the first information is carried in a radio resource control RRC message, and the second information is carried in a medium access control MAC control element CE or downlink control information DCI.

According to a sixth aspect, a communication apparatus is provided. In a design, the apparatus may include modules for performing the corresponding method/operations/steps/actions described in the second aspect. The modules may be hardware circuits, may be software, or may be implemented by using a combination of a hardware circuit and software. In a design, the apparatus includes: a transceiver unit, configured to send first information to a terminal device, where the first information is used to configure M communication parameter groups of N candidate carriers, N is an integer greater than or equal to 1, and M is greater than or equal to N; and a processing unit, configured to determine second information, where the second information indicates at least one communication parameter group, and the at least one communication parameter group is a communication parameter group corresponding to at least one carrier in the N candidate carriers. The transceiver unit is further configured to send second information to the terminal device.

With reference to the sixth aspect, in some implementations of the sixth aspect, the N candidate carriers belong to K frequency bands, and K is a positive integer. A union set of parameter values of one communication parameter in the M communication parameter groups is greater than a maximum value of the one communication parameter supported by the terminal device in the K frequency bands; and/or a union set of parameter values of the one communication parameter in the at least one communication parameter group is less than or equal to the maximum value of the one communication parameter supported by the terminal device in the K frequency bands.

With reference to the sixth aspect, in some implementations of the sixth aspect, the transceiver unit is further configured to receive third information from the terminal device, where the third information indicates a maximum value of at least one communication parameter supported by the terminal device in the K frequency bands, and the communication parameter group includes the at least one communication parameter.

With reference to the sixth aspect, in some implementations of the sixth aspect, the communication parameter group includes one or more of the following communication parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

With reference to the sixth aspect, in some implementations of the sixth aspect, the second information includes at least one piece of indication information, and one piece of indication information indicates one communication parameter group corresponding to one carrier in the at least one carrier.

With reference to the sixth aspect, in some implementations of the sixth aspect, one communication parameter group is a communication parameter group corresponding to one BWP of one candidate carrier, the at least one piece of indication information includes first indication information, the first indication information indicates a first communication parameter group, and the first communication parameter group is a communication parameter group corresponding to a first BWP of a first carrier in the at least one carrier.

With reference to the sixth aspect, in some implementations of the sixth aspect, the first information is used to configure a plurality of communication modes, and the plurality of communication modes include one or more of a non-coherent joint transmission communication mode, a carrier aggregation communication mode, or a coherent joint transmission communication mode. The M communication parameter groups are communication parameter groups corresponding to the N candidate carriers used in the plurality of communication modes.

With reference to the sixth aspect, in some implementations of the sixth aspect, the second information indicates a first communication mode, and the at least one carrier is a carrier used in the first communication mode.

With reference to the sixth aspect, in some implementations of the sixth aspect, the first information is carried in a radio resource control RRC message, and the second information is carried in a medium access control MAC control element CE or downlink control information DCI.

According to a seventh aspect, a communication apparatus is provided. In a design, the apparatus may include modules for performing the corresponding method/operations/steps/actions described in the third aspect. The modules may be hardware circuits, may be software, or may be implemented by using a combination of a hardware circuit and software. In a design, the apparatus includes: a transceiver unit, configured to receive first information from a network device, where the first information is used to configure a plurality of communication modes, and the plurality of communication modes include one or more of a non-coherent joint NCJT communication mode, a carrier aggregation communication mode, or a coherent joint JT communication mode, and the transceiver unit is further configured to receive second information from the network device, where the second information indicates that a first communication mode in the plurality of communication modes is used; and a processing unit, configured to control the transceiver unit to perform communication in the first communication mode.

With reference to the seventh aspect, in some implementations of the seventh aspect, the first information includes parameter configuration information, the parameter configuration information is used to configure M communication parameter groups of N candidate carriers used in the plurality of communication modes, N and M are positive integers, and M is greater than or equal to N. The second information indicates at least one communication parameter group, the at least one communication parameter group is a communication parameter group corresponding to at least one carrier used in the first communication mode, and the N candidate carriers include the at least one carrier. The processing unit is specifically configured to control, based on the at least one communication parameter group, the transceiver unit to perform communication on the at least one carrier.

According to an eighth aspect, a communication apparatus is provided. In a design, the apparatus may include modules for performing the corresponding method/operations/steps/actions described in the fourth aspect. The modules may be hardware circuits, may be software, or may be implemented by using a combination of a hardware circuit and software. In a design, the apparatus includes: a transceiver unit, configured to send first information to a terminal device, where the first information is used to configure a plurality of communication modes, and the plurality of communication modes include one or more of a non-coherent joint NCJT communication mode, a carrier aggregation communication mode, or a coherent joint JT communication mode, and the transceiver unit is further configured to send second information to the terminal device, where the second information is used to activate a first communication mode in the plurality of communication modes.

With reference to the eighth aspect, in some implementations of the eighth aspect, the first information includes parameter configuration information, the parameter configuration information is used to configure M communication parameter groups of N candidate carriers used in the plurality of communication modes, N and M are positive integers, and M is greater than or equal to N. The second information indicates at least one communication parameter group, the at least one communication parameter group is a communication parameter group corresponding to at least one carrier used in the first communication mode, and the N candidate carriers include the at least one carrier.

According to a ninth aspect, a communication apparatus is provided, including a processor. The processor may implement the method according to any one of the first aspect, the third aspect, and the possible implementations of the first aspect or the third aspect. Optionally, the communication apparatus further includes a memory. The processor is coupled to the memory, and may be configured to execute instructions in the memory, to implement the method according to any one of the first aspect, the third aspect, and the possible implementations of the first aspect or the third aspect. Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a tenth aspect, a communication apparatus is provided, including a processor. The processor may implement the method according to any one of the second aspect, the fourth aspect, and the possible implementations of the second aspect or the fourth aspect. Optionally, the communication apparatus further includes a memory. The processor is coupled to the memory, and may be configured to execute instructions in the memory, to implement the method according to any one of the second aspect, the fourth aspect, and the possible implementations of the second aspect or the fourth aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface.

Optionally, the transceiver may be a transceiver circuit. Optionally, the input/output interface may be an input/output circuit.

According to an eleventh aspect, a processor is provided, including an input circuit, an output circuit, and a processing circuit. The processing circuit is configured to receive a signal via the input circuit, and transmit a signal via the output circuit, to enable the processor to perform the method according to any one of the first aspect to the fourth aspect and the possible implementations of the first aspect to the fourth aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and the various circuits are not limited in embodiments of this application.

According to a twelfth aspect, a computer program product is provided. The computer program product includes a computer program (also referred to as code or instructions). When the computer program is run on a computer, the computer is enabled to perform the method according to any one of the first aspect to the fourth aspect and the possible implementations of the first aspect to the fourth aspect.

According to a thirteenth aspect, a computer-readable storage medium is provided. The computer-readable storage medium stores a computer program (also referred to as code or instructions). When the computer program is run on a computer, the computer is enabled to perform the method according to any one of the first aspect to the fourth aspect and the possible implementations of the first aspect to the fourth aspect.

According to a fourteenth aspect, a communication system is provided, including the foregoing at least one terminal device and at least one network device.

### BRIEF DESCRIPTION OF DRAWINGS

FIG. 1 is a diagram of a communication system according to an embodiment of this application;
FIG. 2 is a diagram of intra-site CA according to an embodiment of this application;
FIG. 3 is a diagram of inter-site CA according to an embodiment of this application;
FIG. 4 is a schematic flowchart of a communication method according to an embodiment of this application;
FIG. 5 is a diagram of single-panel carrier switching according to an embodiment of this application;
FIG. 6 is a diagram of multi-panel carrier switching according to an embodiment of this application;
FIG. 7 is another schematic flowchart of a communication method according to an embodiment of this application;
FIG. 8 is a block diagram of an example of a communication apparatus according to an embodiment of this application;
FIG. 9 is a diagram of a structure of an example of a terminal device according to an embodiment of this application; and
FIG. 10 is a diagram of a structure of an example of a network device according to an embodiment of this application.

### DESCRIPTION OF EMBODIMENTS

In embodiments of this application, "/" may represent an "or" relationship between associated objects. For example, A/B may represent A or B. The term "and/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, terms such as "first" and "second" may be used to distinguish technical features with a same or similar function. The terms such as "first" and "second" do not limit a quantity and an execution sequence, and the terms such as "first" and "second" are not limited to be necessarily different. In embodiments of this application, the terms such as "example" or "for example" is used to represent an example, evidence, or a description. Any embodiment or design solution described as "example" or "for example" should not be explained as being more preferred or having more advantages than another embodiment or design solution. The terms such as "example" or "for example" is used to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in this application.

The following describes the technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a 5G new radio (new radio, NR) system, a 6th generation (6th generation, 6G) communication system, a system integrating a plurality of communication systems, and a future communication system. This is not limited in embodiments of this application.

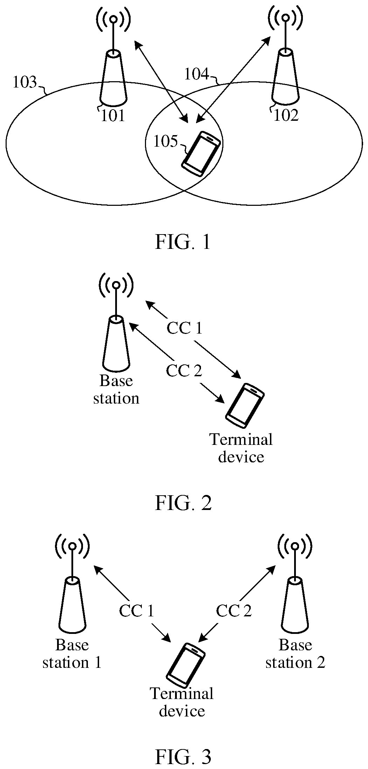

FIG. 1 is a diagram of a communication system 100 applicable to an embodiment of this application. The communication system 100 may include at least one network device, such as a network device 101 and a network device 102 shown in FIG. 1. One network device may manage one or more cells. For example, the network device 101 manages a cell 103, and the network device 102 manages a cell 104. The communication system 100 may further include at least one terminal device, for example, a terminal device 105 shown in FIG. 1. The network device 101 and the network device 102 may communicate with the terminal device 105 in a carrier aggregation (carrier aggregation, CA) communication mode or a joint transmission communication mode. It should be noted that FIG. 1 is merely an example of a communication system applicable to this embodiment of this application, and this application is not limited thereto.

The terminal device in embodiments of this application may also be referred to as a terminal. The terminal may be a device having a wireless transceiver function. The terminal may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device may be user equipment (user equipment, UE). The UE includes a handheld device, vehicle-mounted device, wearable device, or computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. A specific form of a network device is not limited in this application.

An access network device in embodiments of this application may be a device having a wireless transceiver function in an access network, and may be referred to as a radio access network (radio access network, RAN) device. The device includes but is not limited to: a base station, an evolved NodeB (evolved NodeB, eNB), a next generation NodeB (next generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a transmission and reception point (transmission and reception point, TRP), an access point (access point, AP) in a wireless fidelity (wireless fidelity, WI-FI) system, a wireless relay point, and a wireless backhaul point. A specific form of the network device is not limited in this application.

The TRP in embodiments of this application may be a transmission and reception point (transmission and reception point, TRP) having an information sending function and an information receiving function. The TRP may be an access network device, or an antenna panel of an access network device, or referred to as an antenna port group, or the TRP may be a baseband unit (baseband unit, BBU), a remote radio unit (remote radio unit, RRU), a distributed unit (distributed unit, DU), or the like of a network device. A specific form of the TRP is not limited in this application.

To better understand embodiments of this application, the following briefly describes technologies and terms used in this specification.

### 1. Cell and carrier

The cell may be understood as coverage of a radio signal identified by a network device identifier or a cell global identifier. From a perspective of resource management, the cell is a unit for managing a wireless communication resource. A physical layer resource of the cell includes at least one carrier. From a perspective of a physical layer, the carrier is a bearer for carrying a radio signal. The radio signal may include one or more of a control information signal, a service data signal, and a reference signal. The carrier occupies a specific frequency domain resource, and is represented by a carrier frequency and a bandwidth of a carrier frequency band. One cell includes at least one carrier, the at least one carrier includes one downlink carrier, and the downlink carrier is for carrying a radio signal sent by a network device to a terminal. The at least one carrier of the one cell may further include one or more uplink carriers, and the uplink carrier is for carrying a radio signal sent by the terminal to the network. According to different duplex manners, for example, a downlink carrier and an uplink carrier of one cell may be different when the cell uses a frequency division duplex (frequency division duplex, FDD) manner; and a downlink carrier and an uplink carrier of one cell may be the same when the cell uses a time division duplex (time division duplex, TDD) manner.

### 2. CA communication mode

The CA communication mode is a communication mode in which a network communicates with a terminal device by aggregating bandwidth resources of a plurality of downlink carriers, and can effectively improve a downlink transmission rate. Each carrier in a plurality of carriers aggregated in the CA communication mode is referred to as a component carrier (component carrier, CC) in the CA communication mode. The CA communication mode may include intra-site CA and inter-site CA. When the plurality of carriers in the CA communication mode are carriers of a same base station, CA is referred to as intra-site CA. As shown in FIG. 2, a base station communicates with a terminal device in a CA communication mode by using two carriers: a CC 1 and a CC 2 of the base station. When the plurality of carriers in the CA communication mode include carriers of different base stations, CA is referred to as inter-site CA. As shown in FIG. 3, in a CA communication mode including a CC1 and a CC2, a base station 1 communicates with a terminal device on the CC 1, and a base station 2 communicates with the terminal device on the CC 2.

### 3. Joint transmission communication mode

The joint transmission communication mode, which may also be referred to as coordinated multi-point (coordinated multi-point, CoMP) transmission, is a mode in which a plurality of TRPs communicate with a terminal, and can increase downlink data coverage and improve data transmission reliability. The joint transmission communication mode includes a coherent joint transmission (coherent joint transmission, CJT) mode and a non-coherent joint transmission (non-coherent joint transmission, NCJT) mode. The CJT mode means that after information exchange, a plurality of TRPs perform precoding processing on data by using same precoding, and the plurality of TRPs send precoded data to a terminal device on a same transmission resource (for example, a time-frequency resource) of a same carrier, where the data sent by the plurality of TRPs is superposed in phase on a radio channel; and the terminal device receives superposed data on the channel. The NCJT mode indicates that a plurality of TRPs may determine precoding of data based on a state of a channel between each of the plurality of TRPs and a terminal device, and after performing precoding processing on the data, send precoded data to the terminal device on different transmission resources; and the terminal device separately receives the data from the plurality of TRPs.

Currently, a terminal device reports a processing capability of the terminal device on each carrier to a network device in a form of a carrier. The network device configures a communication mode that meets the processing capability of the terminal device on each carrier for the terminal device based on the processing capability of the terminal device. The terminal device communicates with the network device in the configured communication mode. However, when the network device configures the communication mode for the terminal device via an RRC message, the network device needs to reconfigure the communication mode via the RRC message when a change occurs in the communication mode. Consequently, a delay from time when the communication mode is configured to time when the communication mode takes effect is large, a change in a communication requirement of the terminal device cannot be dynamically adapted in time, and a data transmission rate and/or communication reliability of the terminal device cannot be improved.

Embodiments of this application provide that the network device may configure a plurality of communication parameter groups of at least one candidate carrier corresponding to a plurality of communication modes for the terminal device, so that the terminal device can learn of a candidate carrier that may be used and a corresponding communication parameter group. The network device may flexibly change the communication mode of the terminal device by activating the at least one configured carrier, to adapt to the communication requirement of the terminal device in time, so that a delay of changing the communication mode can be reduced.

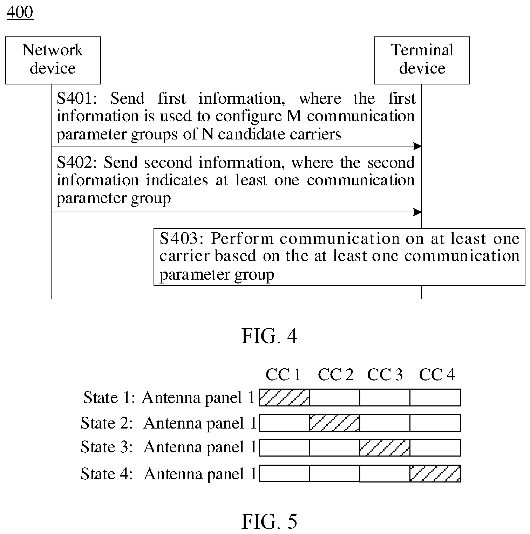

FIG. 4 is a schematic flowchart of a communication method 400 according to an embodiment of this application.

S401: A network device sends first information to a terminal device, where the first information is used to configure M communication parameter groups of N candidate carriers.

N is an integer greater than or equal to 1, and M is greater than or equal to N. Correspondingly, the terminal device receives the first information from the network device, and determines the M communication parameter groups of the N candidate carriers based on the first information.

Optionally, the first information is carried in an RRC message.

By way of example but not limitation, one communication parameter group includes one or more of the following communication parameters:
a configuration parameter of a control resource set (control resource set, CORESET) pool, a quantity of blind detections of a physical downlink control channel (physical downlink control channel, PDCCH), a maximum quantity of physical downlink shared channels (physical downlink shared channels, PDSCHs) transmitted in each time unit, a maximum quantity of physical uplink shared channels (physical uplink shared channels, PUSCHs) transmitted in each time unit, a maximum quantity of transport layers of a shared channel, or a quantity of transmission configuration indicator TCI states.

The network device may configure, for the terminal device by using the first information, a plurality of communication parameter groups corresponding to at least one candidate carrier, so that the network device can indicate one or more communication parameter groups based on a channel and/or load, and the terminal device performs communication in a communication mode that meets a requirement.

In an implementation, the communication parameter group is a carrier-level communication parameter group, and one communication parameter group is applicable to each bandwidth part (bandwidth part, BWP) of a carrier corresponding to the communication parameter group.

For example, a candidate carrier 1 in the N candidate carriers may correspond to a communication parameter group 1 and a communication parameter group 2 in the M communication parameter groups. If the network device indicates the communication parameter group 1 in S402, the network device and the terminal device communicate with each other on the candidate carrier 1 by using the communication parameter group 1. One carrier may include one or more BWPs. Regardless of a specific BWP in the candidate carrier 1 on which the terminal device communicates with a TRP corresponding to the candidate carrier 1, a parameter in the communication parameter group 1 needs to be satisfied.

In another implementation, the communication parameter group is a BWP-level communication parameter group, and one communication parameter group is a communication parameter group corresponding to one BWP of one carrier.

In other words, the communication parameter group is a BWP-level communication parameter group.

For example, the M communication parameter groups may include a communication parameter group corresponding to one BWP of one candidate carrier, or may include communication parameter groups corresponding to a plurality of BWPs of one candidate carrier. For example, a communication parameter group 1 corresponding to a BWP 1 of a candidate carrier 1 and a communication parameter group 2 corresponding to a BWP 2 of the candidate carrier 1 are configured in the first information. If the network device indicates the communication parameter group 2 in S402, the terminal device communicates on the BWP 2 based on the communication parameter group 2.

S402: The network device sends second information to the terminal device, where the second information indicates at least one communication parameter group.

The at least one communication parameter group is a communication parameter group in the M communication parameter groups indicated by the first information, and the at least one communication parameter group is a communication parameter group corresponding to at least one carrier.

Correspondingly, the terminal device receives the second information from the network device. The terminal device determines, based on the second information, to use the at least one communication parameter group indicated by the second information, and performs communication on the at least one carrier corresponding to the at least one communication parameter group.

It should be noted that the second information indicates the at least one communication parameter group, indicating that the network device notifies, by using the second information, the terminal device to use the at least one communication parameter group for communication. The "indication" may also be referred to as enabling, taking effective, or activation. This is not limited in this application.

As an example limitation, the second information may be carried in medium access control (medium access control, MAC) control element (control element, CE) information, or may be carried in downlink control information (downlink control information, DCI).

The network device may indicate, by using the second information, to use at least one communication parameter group in the M communication parameter groups configured for the terminal device, so that the terminal device performs communication, based on the indicated communication parameter group, in a communication mode that meets a requirement.

Optionally, the second information includes at least one piece of indication information, and one piece of indication information indicates one communication parameter group corresponding to one carrier in the at least one carrier.

In an implementation, the communication parameter group is a carrier-level communication parameter group.

For example, if the at least one piece of indication information includes first indication information, the first indication information indicates a first communication parameter group, and the first communication parameter group is a communication parameter group corresponding to a first carrier, the first communication parameter group is applicable to each BWP of the first carrier. For example, the first communication parameter group includes a maximum quantity P of PDSCHs transmitted in each time unit. After receiving the second information, the terminal device determines to perform communication by using the first communication parameter group corresponding to the first carrier. In this case, the terminal device may determine that the first communication parameter group is satisfied when the terminal device performs communication on any BWP of the first carrier. For example, regardless of a specific BWP of the first carrier on which the terminal device performs communication, a quantity of PDSCHs transmitted in each time unit is less than or equal to P. However, this application is not limited thereto. In this example, the second information may further include other indication information in addition to the first indication information, and the terminal device performs communication on a corresponding carrier based on a communication parameter group indicated by the indication information.

In another implementation, the communication parameter group is a BWP-level communication parameter group. One communication parameter group is specifically a communication parameter group corresponding to one BWP of one carrier.

For example, the at least one piece of indication information includes first indication information, the first indication information indicates a first communication parameter group, and the first communication parameter group is a communication parameter group corresponding to a first BWP of a first carrier in the at least one carrier. After receiving the second information, the terminal device performs communication on the first BWP based on the first communication parameter group.

The M communication parameter groups corresponding to the N candidate carriers configured by using the first information is communication parameter groups corresponding to candidate carriers used in a plurality of communication modes, so that the plurality of communication modes may be implemented. The plurality of communication modes may include but are not limited to one or more of a non-coherent joint transmission communication mode, a carrier aggregation communication mode, or a coherent joint transmission communication mode. The second information indicates the at least one communication parameter group, so that a communication mode, for example, a first communication mode, can be implemented.

In an example, the first communication mode is the non-coherent joint transmission communication mode.

The network device indicates the at least one communication parameter group by using the second information, and notifies the terminal device to use the non-coherent joint transmission communication mode based on the at least one communication parameter group, in other words, a plurality of TRPs perform non-coherent joint transmission with the terminal device. The plurality of TRPs may be a plurality of TRPs of the network device, or may not be TRPs of the network device, or a part of the plurality of TRPs are TRPs of the network device. This is not limited in this application.

The network device may specifically change a CA communication mode of the terminal device to the non-coherent joint transmission communication mode by using the second information. Alternatively, the network device may change, by using the second information, a single-carrier communication mode between one TRP and the terminal device to the non-coherent joint transmission communication mode. Alternatively, the network device may change one non-coherent joint transmission communication mode of the terminal device to another non-coherent joint transmission communication mode by using the second information. For example, the network device may use the second information to indicate different communication parameter groups to implement a carrier change, a TRP change, a partial parameter change, or the like.

Optionally, the second information includes one piece of indication information. For example, indication information 1 indicates a communication parameter group 1, and the communication parameter group 1 is a communication parameter group 1 corresponding to a carrier 1 in the M communication parameter groups.

The communication parameter group 1 includes a configuration parameter of a CORESET pool, and a quantity L of CORESET pools indicated by the configuration parameter of the CORESET pool is an integer greater than 1. In other words, there are a plurality of CORESET pools in the communication parameter group 1. For a network side, one CORESET pool corresponds to one TRP, and L CORESET pools are respectively CORESET pools corresponding to L TRPs in the network in the non-coherent joint transmission communication mode. The L TRPs perform non-coherent joint transmission with the terminal device on the carrier 1, and the L TRPs may send downlink control information to the terminal device on CORESETs in the CORESET pools corresponding to the L TRPs, to schedule data transmission of the terminal device. Correspondingly, the terminal device determines the L CORESET pools based on the communication parameter group 1, separately detects the downlink control information on the CORESETs in the L CORESET pools, receives data from the plurality of TRPs based on the downlink control information, and performs combination processing. In this way, when communication quality of the terminal device reduces, the network device indicates the terminal device to use the non-coherent joint transmission communication mode, so that the terminal device performs non-coherent joint transmission with a plurality of TRPs in a network, to improve communication reliability of the terminal device.

In another example, the first communication mode is the CA communication mode.

For example, the network device may change the non-coherent joint transmission communication mode of the terminal device to the CA communication mode by using the second information. Alternatively, the network device may change, by using the second information, a single-carrier communication mode between one TRP and the terminal device to a CA communication mode between one or more TRPs and the terminal device. Alternatively, the network device may change one CA communication mode of the terminal device to another CA communication mode by using the second information, for example, a TRP change or a communication parameter group change occurs.

Optionally, the second information includes Q pieces of indication information, the Q pieces of indication information indicate Q communication parameter groups in the M communication parameter groups, the Q communication parameter groups correspond to Q carriers, and Q is an integer greater than 1. The terminal device may communicate with P TRPs based on the Q communication parameter groups in a Q-carrier CA communication mode, and P is less than or equal to Q.

For example, the Q communication parameter groups include a communication parameter group 1 corresponding to a carrier 1 and a communication parameter group 2 corresponding to a carrier 2. The terminal device may communicate with at least one TRP in a CA communication mode including the carrier 1 and the carrier 2. One TRP may communicate with the terminal device in the CA communication mode on one or more carriers in the Q carriers.

In the first communication mode, the P TRPs communicate with the terminal device on respective carriers of the P TRPs by using communication parameter groups corresponding to the respective carriers. Optionally, at least one communication parameter group in the Q communication parameter groups includes a CORESET configuration parameter. For example, one communication parameter group in the Q communication parameter groups includes a CORESET configuration parameter. The network device may send downlink control information on a CORESET configured based on the CORESET configuration parameter, to schedule data transmission on the Q carriers. Correspondingly, the terminal device receives the downlink control information on the CORESET, and receives data of the terminal device on a scheduled carrier based on the downlink control information. In this way, the network device indicates the carrier aggregation communication mode, so that the terminal device performs multi-carrier aggregation communication with one or more TRPs in the network, to improve a data transmission rate of the terminal device.

In still another example, the first communication mode is the coherent joint transmission communication mode.

Optionally, the second information includes one piece of indication information, for example, indication information 3. The indication information 3 indicates a communication parameter group 3, and the communication parameter group 3 is a communication parameter group 3 corresponding to a carrier 3 in the M communication parameter groups.

The communication parameter group 3 is configured with a CORESET pool. A plurality of TRPs may perform coherent data transmission on the carrier 3 based on the communication parameter group 3 through information exchange. The terminal device receives coherently superimposed data from the plurality of TRPs on a same resource. For the terminal device, a plurality of TRPs in the coherent joint transmission communication mode may be transparent, and the terminal device may be considered to receive data from one TRP, or the terminal device may be considered to use a single-carrier communication mode to communicate with one TRP. However, this application is not limited thereto.

In still another example, the first communication mode may be a communication mode combining the CA communication mode and the non-coherent joint transmission communication mode, or may be a communication mode combining the CA communication mode and the coherent joint transmission communication mode.

Optionally, the second information includes a plurality of pieces of indication information, and communication parameter groups indicated by the plurality of pieces of indication information may implement CA communication between one or more TRPs and the terminal device on a plurality of carriers, and may further implement non-coherent joint transmission on one or more carries in the plurality of carriers. For example, the terminal device performs non-coherent joint transmission with a TRP 1 and a TRP 2 on a carrier 1 in the plurality of carriers, and performs non-coherent joint transmission with a TRP 3 and a TRP 4 on a carrier 2 in the plurality of carriers. However, this application is not limited thereto. Alternatively, coherent joint transmission on one carrier in the plurality of carriers may be further implemented. For example, coherent joint transmission is performed on one carrier in the plurality of carriers with one group of TRPs, and coherent joint transmission is performed on another carrier in the plurality of carriers with another group of TRPs. Different groups may include one or more same TRPs. This is not limited in this application.

For example, the second information indicates that two carriers, the carrier 1 and a carrier 2, are used. The second information includes a plurality of pieces of indication information, indicating a plurality of communication parameter groups corresponding to the two carriers. For example, the plurality of communication parameter groups include a communication parameter group 1 corresponding to the carrier 1 and a communication parameter group 2 corresponding to the carrier 2. The TRP 1 may perform CA communication on the carrier 1 based on the communication parameter group 1, the TRP 2 may perform CA communication on the carrier 2 based on the communication parameter group 2, and the TRP 2 may also operate on the carrier 1. The indication information in the second information further indicates a communication parameter group 3, and the TRP 1 and the TRP 2 may perform joint transmission on the carrier 1 based on the communication parameter group 3, for example, may perform non-coherent joint transmission or coherent joint transmission. However, this application is not limited thereto. The second information may alternatively be used to activate the CA communication mode for communication of the TRP 2 with the terminal device on the carrier 1 and the carrier 2 as well as the non-coherent joint transmission communication mode of the TRP 1 and the TRP 2, or activate the CA communication mode for communication of the TRP 2 with the terminal device on the carrier 1 and the carrier 2 as well as the coherent joint transmission communication mode of the TRP 1 and the TRP 2.

Optionally, the N candidate carriers belong to K frequency bands, and K is a positive integer. A union set of parameter values of one communication parameter in the M communication parameter groups is greater than a maximum value of the one communication parameter supported by the terminal device in the K frequency bands; and/or a union set of parameter values of the one communication parameter in the at least one communication parameter group is less than or equal to the maximum value of the one communication parameter supported by the terminal device in the K frequency bands.

For example, the network device may configure, for the terminal device by using the first information, M communication parameter groups corresponding to N carriers that can implement a plurality of communication modes. For example, the plurality of communication modes include a non-coherent joint transmission communication mode, a CA communication mode, and a coherent joint transmission communication mode. A union set of parameter values of one communication parameter in the communication parameter groups corresponding to the N carriers configured by using the first information may be greater than a communication capability of the terminal device. The network device may correspondingly activate, based on a change in a communication requirement of the terminal device, a communication mode that satisfies the communication capability of the terminal device. In comparison with changing the communication mode by reconfiguring the communication parameter group through RRC, the communication mode that satisfies the communication capability of the terminal device is activated after the communication parameter groups corresponding to the plurality of communication modes are preconfigured, so that a delay in changing the communication mode can be reduced, and flexibility of communication adaptation can be improved.

Optionally, the terminal device sends third information to the network device. The third information indicates a communication capability of the terminal device in the K frequency bands, K is a positive integer, and the N candidate carriers belong to the K frequency bands.

In other words, the terminal device may report the communication capability of the terminal device in K frequency band combinations to the network device by using the third information.

Correspondingly, the network device receives the third information from the terminal device, and determines the communication capability of the terminal device in the K frequency bands.

Optionally, the third information includes one or more of the following communication parameters of the terminal device in the K frequency bands:
a maximum quantity of supported CORESET pools, a maximum quantity of supported CORESETs, a quantity of supported blind detections of a PDCCH, a maximum quantity of received PDSCHs supported in each time unit, a maximum quantity of physical uplink shared channels (physical uplink shared channels, PUSCHs) supported in each time unit, a maximum quantity of supported PDSCH transport layers, a maximum quantity of supported PUSCH transport layers, or a quantity of supported transmission configuration indicator (transmission configuration indicator, TCI) states.

The network device configures, for the terminal device based on the communication capability of the terminal device in the K frequency bands, the M communication parameter groups corresponding to the plurality of communication modes. The network device may activate at least one of the communication parameter groups for the terminal device based on a reference channel, load, and/or other factors, to implement one communication mode. A union set of parameter values of one communication parameter in a communication parameter group corresponding to at least one carrier used in the first communication mode is less than or equal to a maximum value of one communication parameter indicated by the third information.

In this implementation, the terminal device reports the communication capability of the terminal device to the network device in the form of a frequency band combination. In comparison with reporting the communication capability of the terminal device in the form of a carrier, the communication capability of the terminal device can be flexibly allocated to each carrier in the frequency band combination.

S403: The terminal device performs communication on the at least one carrier based on the at least one communication parameter group.

For example, the M communication parameter groups include the communication parameter group 1 corresponding to the carrier 1, and a plurality of CORESET pools are configured based on a configuration parameter of a CORESET pool in the communication parameter group 1. The network device may indicate the communication parameter group 1 by using the second information, to implement a single-carrier non-coherent joint transmission communication mode between the plurality of TRPs and the terminal device. For another example, the network device may indicate, by using the second information, a plurality of communication parameter groups corresponding to a plurality of carriers in the M communication parameter groups, to implement a multi-carrier CA communication mode for the terminal device. For another example, the network device may activate, by using the second information, the communication parameter group 3 corresponding to the carrier 3. A CORESET pool is configured based on a configuration parameter of a CORESET pool in the communication parameter group 3, to implement a coherent joint transmission communication mode between the plurality of TRPs and the terminal device, or a single-carrier communication mode between one TRP and the terminal device.

In an implementation, the network device may configure a plurality of communication parameter groups corresponding to a plurality of carriers for a terminal device having a single antenna panel, and the network device may flexibly switch a transmission carrier (or referred to as an operating carrier) of the single antenna panel of the terminal device by using the second information, to flexibly switch an operating carrier of an antenna panel.

For example, one frequency band includes four carriers, and the terminal device supports a maximum of two PDSCHs/PUSCHs in the frequency band. The terminal device sends the third information to the network device. The third information indicates a communication capability of the terminal device in the frequency band, and determines that the terminal device supports a maximum of two PDSCHs/PUSCHs in the frequency band, and the third information further indicates that the terminal device includes one antenna panel. The network device may configure, for the terminal device by using the first information, communication parameter groups respectively corresponding to the four carriers, and configure one PDSCH on each of the four carriers. A quantity of PDSCHs configured by the network device for the terminal device on the frequency band is four, which is greater than the capability of the terminal device in the frequency band. The network device may indicate, at a time by using the second information, a communication parameter group corresponding to one carrier, and the antenna panel of the terminal device operates on the carrier. As shown in FIG. 5, in this manner, an operating carrier of an antenna panel 1 of the terminal device can be flexibly switched among the four carriers (for example, a carrier 1, a carrier 2, a carrier 3, and a carrier 4). In other words, an operating carrier of one antenna panel is flexibly switched in four communication modes: a mode 1, a mode 2, a mode 3, and a mode 4 shown in the figure. This can reduce a switching delay caused by switching the operating carrier in a reconfiguration manner, and improve flexibility of communication adaptation. Optionally, the frequency band may be a high frequency band.

In another implementation, the network device may configure a plurality of communication parameter groups corresponding to a plurality of carriers for a terminal device having a plurality of antenna panels, and the network device may flexibly switch a plurality of antenna panels between the plurality of carriers by using the second information.

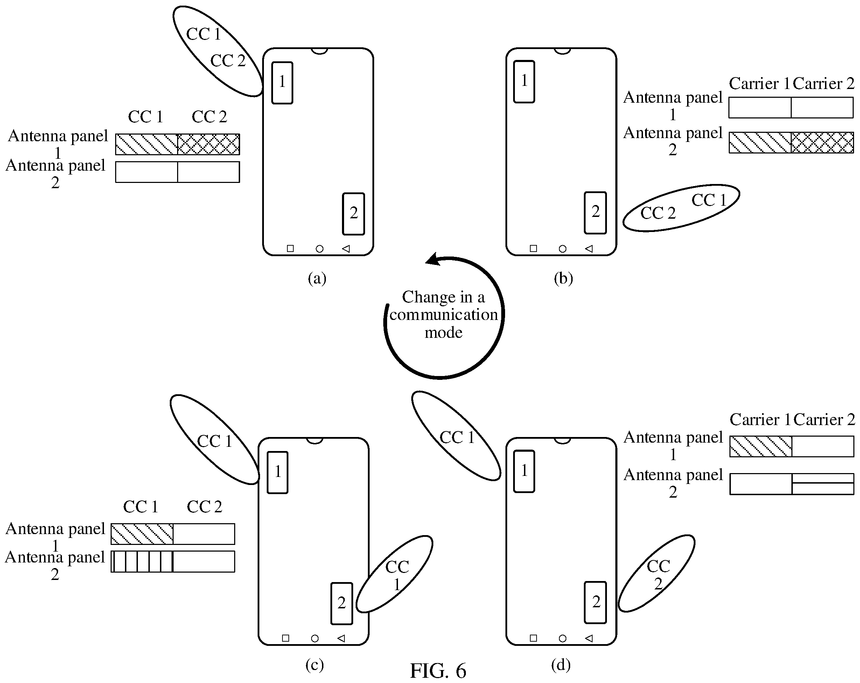

For example, as shown in FIG. 6, an antenna panel 1 and an antenna panel 2 are configured for the terminal device. For example, the third information sent by the terminal device to the network device indicates that the terminal device supports simultaneous transmission of two PDSCHs/PUSCHs in the K frequency bands. A plurality of communication parameter groups corresponding to two carriers in the K frequency bands are configured in the first information sent by the network device to the terminal device. The network device may flexibly switch the plurality of communication modes for the terminal device by using the second information. The second information sent by the network device to the terminal device indicates the communication parameter group 1 corresponding to the carrier 1 and the communication parameter group 2 corresponding to the carrier 2, and both the communication parameter group 1 and the communication parameter group 2 are configured with a case that the terminal device uses the antenna panel 1. For example, the communication parameter group 1 and the communication parameter group 2 each may include a TCI, and the TCI indicates the antenna panel 1. In this case, the network device notifies the terminal device to use a communication mode (a) shown in FIG. 6, that is, a CA communication mode with a single antenna panel in which the terminal device uses the carrier 1 and the carrier 2 on the antenna panel 1. Alternatively, the second information indicates a communication parameter group 3 corresponding to the carrier 1 and a communication parameter group 4 corresponding to the carrier 2, and both the communication parameter group 3 and the communication parameter group 4 indicate that the terminal device uses the antenna panel 2. For example, if the antenna panel 2 may be indicated by using a TCI, the network device notifies the terminal device to use a communication mode (b) shown in FIG. 6, that is, a CA communication mode with a single antenna panel in which the terminal device uses the carrier 1 and the carrier 2 on the antenna panel 2. Alternatively, the network device may indicate the communication parameter group 1 and a communication parameter group 4 by using the second information, to indicate the terminal device to use a communication mode (d) shown in FIG. 6, that is, a CA communication mode with a plurality of antenna panels in which the antenna panel 1 of the terminal device operates on the carrier 1 and the antenna panel 2 operates on the carrier 2. Alternatively, the network device may notify, by using the second information, the terminal device to use a communication mode (c) shown in FIG. 6, that is, a spatial division multiplexing (spatial division multiplexing, SDM) communication mode with a plurality of antenna panels of the terminal device. For example, the second information indicates a communication parameter group 5 corresponding to the carrier 1, and the communication parameter group 5 is configured with a case that the terminal device uses the antenna panel 1 and the antenna panel 2. This implements flexible switching of the plurality of antenna panels of the terminal device between the plurality of carriers, reduces a switching delay of changing the communication mode in a reconfiguration manner, and improves flexibility of communication adaptation.

According to this embodiment of this application, the network device may configure the plurality of communication modes for the terminal device, so that the terminal device can learn of a possible communication mode that may be used, and the network device can flexibly change the communication mode between the network device and the terminal device by using communication mode indication information, to overcome a channel change and/or meet a load requirement.

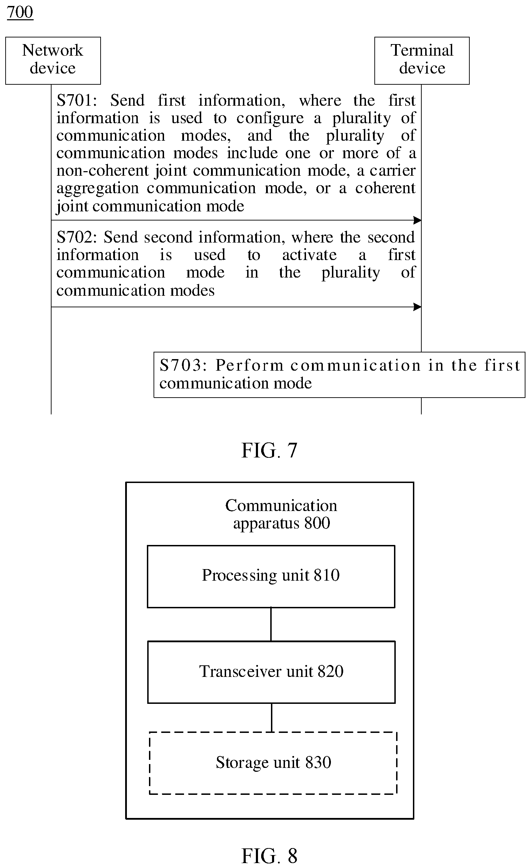

FIG. 7 is a schematic flowchart of a communication method 700 according to an embodiment of this application. It should be noted that, for a part in an embodiment shown in FIG. 7 that is the same as that in the embodiment shown in FIG. 4, refer to the embodiment shown in FIG. 4. For brevity, details are not described herein again.

S701: A network device sends first information to a terminal device, where the first information is used to configure a plurality of communication modes.

Correspondingly, the terminal device receives the first information from the network device. The terminal device determines a plurality of candidate communication modes based on the first information.

For example, the plurality of communication modes include but are not limited to one or more of a non-coherent joint transmission communication mode, a carrier aggregation communication mode, or a coherent joint transmission communication mode.

By way of example but not limitation, the first information is carried in an RRC message.

Optionally, the first information includes parameter configuration information, the parameter configuration information is used to configure M communication parameter groups corresponding to N candidate carriers used in the plurality of communication modes, N and M are positive integers, and M is greater than or equal to N.

One communication parameter group in the M communication parameter groups of the N candidate carriers configured by using the parameter configuration information is a communication parameter group corresponding to one candidate carrier, and one candidate carrier in the N candidate carriers may correspond to one or more communication parameter groups in the M communication parameter groups.

In an implementation, the communication parameter group is a carrier-level communication parameter group, and one communication parameter group is applicable to each BWP of a carrier corresponding to the communication parameter group.

In another implementation, the communication parameter group is a BWP-level communication parameter group. One communication parameter group is specifically a communication parameter group corresponding to one BWP of one candidate carrier.

S702: The network device sends second information to the terminal device, where the second information indicates a first communication mode in the plurality of communication modes.

Correspondingly, the terminal device receives the second information from the network device. The terminal device determines to communicate with the network device in the first communication mode. The first communication mode may be one or more of a non-coherent joint transmission communication mode, a multi-carrier carrier aggregation communication mode, or a coherent joint transmission communication mode.

In an implementation, the second information includes identifier information of the first communication mode, and the terminal device determines, based on the identifier information of the first communication mode and the first information, a communication parameter group corresponding to at least one carrier used in the first communication mode. The first information is configured with identifier information of each communication mode in the plurality of communication modes, and configured with one or more communication parameter groups corresponding to a carrier used in a communication mode corresponding to the identifier information of each communication mode.

In another implementation, the second information includes at least one piece of indication information, the at least one piece of indication information indicates at least one communication parameter group, and the at least one communication parameter group is a communication parameter group corresponding to at least one carrier used in the first communication mode.

Optionally, the communication parameter group may be a carrier-level communication parameter group, or may be a BWP-level communication parameter group.

In an example, the first communication mode is the non-coherent joint transmission communication mode. The second information includes one piece of indication information 1, and the indication information 1 indicates a communication parameter group 1 corresponding to a carrier 1. The terminal device implements the non-coherent joint transmission communication mode on the carrier 1 based on the communication parameter group 1.

In another example, the first communication mode is the multi-carrier CA communication mode. The second information includes Q pieces of indication information, and the Q pieces of indication information indicate Q communication parameter groups corresponding to Q carriers. The terminal device may implement a Q-carrier CA communication mode based on the Q communication parameter groups.

In still another example, the first communication mode is the coherent joint transmission communication mode. The second information includes one piece of indication information, for example, indication information 3. The indication information 3 indicates a communication parameter group 3 corresponding to a carrier 3. The terminal device may implement the coherent joint transmission communication mode on the carrier 3 based on the Q communication parameter groups.

Optionally, the terminal device sends third information to the network device. The third information indicates a communication capability of the terminal device in K frequency bands, K is a positive integer, and the N candidate carriers belong to the K frequency bands. Correspondingly, the network device configures a plurality of communication modes for the terminal device based on the communication capability of the terminal device in the K frequency bands. In comparison with reporting the communication capability of the terminal device in the form of a carrier, the communication capability of the terminal device can be flexibly allocated to each carrier in a frequency band combination.

S703: The terminal device performs communication in the first communication mode.

Specifically, the first communication mode uses at least one carrier, and the terminal device communicates in the first communication mode based on a communication parameter group corresponding to the at least one carrier. For example, the first communication mode is the non-coherent joint transmission communication mode, and the terminal device may perform non-coherent joint transmission with a plurality of TRPs. Alternatively, the first communication mode is the multi-carrier carrier aggregation communication mode, and the terminal device may implement a CA communication mode with one or more TRPs. Alternatively, the first communication mode is the coherent joint transmission communication mode, and the terminal device may perform single-carrier coherent joint communication with a plurality of TRPs.

According to the foregoing solution, the network device may configure the plurality of communication modes for the terminal device, so that the terminal device can learn of a possible communication mode that may be used, and the network device can flexibly change the communication mode of the terminal device by using the indication information, and can adapt to a communication requirement of the terminal device in time, so that a delay of changing the communication mode can be reduced, and flexibility of communication adaptation is improved.

The foregoing describes in detail the communication method provided in this application with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a block diagram of a communication apparatus according to this application. As shown in FIG. 8, the communication apparatus 800 may include a transceiver unit 820.

In a possible design, the communication apparatus 800 may correspond to the terminal device in the foregoing method, a chip configured in (or used in) the terminal device, or another apparatus, module, circuit, unit, or the like that can implement the method performed by the terminal device.

It should be understood that the communication apparatus 800 may include units configured to perform the methods performed by the terminal device in the methods shown in FIG. 4 and FIG. 7. In addition, the units in the communication apparatus 800 and the foregoing other operations and/or functions are respectively used to implement corresponding procedures of the methods shown in FIG. 4 and FIG. 7.

Optionally, the communication apparatus 800 may further include a processing unit 810. The processing unit 810 may be configured to process instructions or data, to implement a corresponding operation.

It should be further understood that when the communication apparatus 800 is the chip configured in (or used in) the terminal device, the transceiver unit 820 in the communication apparatus 800 may be an input/output interface or a circuit in the chip, and the processing unit 810 in the communication apparatus 800 may be a processor in the chip.

Optionally, the communication apparatus 800 may further include a storage unit 830. The storage unit 830 may be configured to store instructions or data. The processing unit 810 may execute the instructions or the data stored in the storage unit, to enable the communication apparatus to implement a corresponding operation.

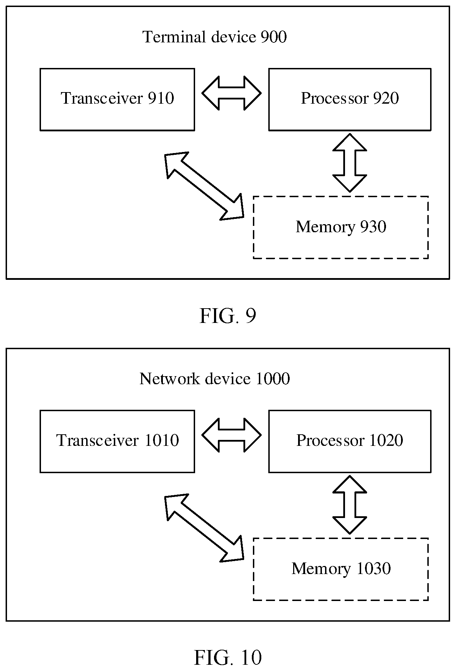

It should be understood that the transceiver unit 820 in the communication apparatus 800 may be implemented through a communication interface (for example, a transceiver or an input/output interface), for example, may correspond to a transceiver 910 in a terminal device 900 shown in FIG. 9. The processing unit 810 in the communication apparatus 800 may be implemented through at least one processor, for example, may correspond to a processor 920 in the terminal device 900 shown in FIG. 9. Alternatively, the processing unit 810 in the communication apparatus 800 may be implemented through at least one logic circuit. The storage unit 830 in the communication apparatus 800 may correspond to a memory in the terminal device 900 shown in FIG. 9.

It should be further understood that a specific process in which each unit performs the foregoing corresponding steps has been described in detail in the foregoing methods. For brevity, details are not described herein again.

In another possible design, the communication apparatus 800 may correspond to the network device in the foregoing methods, for example, a chip configured in (or used in) the network device, or another apparatus, module, circuit, or unit that can implement the methods of the network device.

It should be understood that the communication apparatus 800 may include units configured to perform the methods performed by the network device in the methods shown in FIG. 4 and FIG. 7. In addition, the units in the communication apparatus 800 and the foregoing other operations and/or functions are respectively used to implement corresponding procedures of the methods shown in FIG. 4 and FIG. 7.

Optionally, the communication apparatus 800 may further include the processing unit 810. The processing unit 810 may be configured to process instructions or data, to implement a corresponding operation.

It should be further understood that when the communication apparatus 800 is the chip configured in (or used in) the network device, the transceiver unit 820 in the communication apparatus 800 may be an input/output interface or a circuit in the chip, and the processing unit 810 in the communication apparatus 800 may be a processor in the chip.

Optionally, the communication apparatus 800 may further include the storage unit 830. The storage unit 830 may be configured to store instructions or data. The processing unit 810 may execute the instructions or the data stored in the storage unit, to enable the communication apparatus to implement a corresponding operation.

It should be understood that when the communication apparatus 800 is the network device, the transceiver unit 820 in the communication apparatus 800 may be implemented through a communication interface (for example, a transceiver or an input/output interface), for example, may correspond to a transceiver 1010 in a network device 1000 shown in FIG. 10. The processing unit 810 in the communication apparatus 800 may be implemented through at least one processor, for example, may correspond to a processor 1020 in the network device 1000 shown in FIG. 10. The processing unit 810 in the communication apparatus 800 may be implemented through at least one logic circuit. The storage unit 830 in the communication apparatus 800 may correspond to a memory in the network device 1000 shown in FIG. 10.

It should be further understood that a specific process in which each unit performs the foregoing corresponding steps has been described in detail in the foregoing methods. For brevity, details are not described herein again.

FIG. 9 is a diagram of a structure of a terminal device 900 according to this application. The terminal device 900 may be used in the system shown in FIG. 1, to perform functions of the terminal device in the foregoing methods. As shown in the figure, the terminal device 900 includes a processor 920 and a transceiver 910. Optionally, the terminal device 900 further includes a memory 930. The processor 920, the transceiver 910, and the memory 930 may communicate with each other through an internal connection path, to transfer a control signal and/or a data signal. The memory 930 is configured to store a computer program, and the processor 920 is configured to execute the computer program in the memory 930, to control the transceiver 910 to receive and send a signal.

The processor 920 may be configured to perform an action that is implemented inside the terminal device and that is described in the foregoing methods. The transceiver 910 may be configured to perform an action that is of sending to a network device or receiving from the network device by the terminal device and that is described in the foregoing methods. For details, refer to the descriptions in the foregoing methods. Details are not described herein again.

Optionally, the terminal device 900 may further include a power supply, configured to supply power to various devices or circuits in the terminal device.

FIG. 10 is a diagram of a structure of a network device 1000 according to this application. The network device 1000 may be used in the system shown in FIG. 1, and performs functions of the network device in the foregoing methods. As shown in the figure, the network device 1000 includes a processor 1020 and a transceiver 1010. Optionally, the network device 1000 further includes a memory. The processor 1020, the transceiver 1010, and the memory 1030 may communicate with each other through an internal connection path, to transfer a control signal and/or a data signal. The memory 1030 is configured to store a computer program, and the processor 1020 is configured to execute the computer program in the memory 1030, to control the transceiver 1010 to receive and send a signal.

The processor 1020 may be configured to perform an action that is implemented inside the network device and that is described in the foregoing methods. The transceiver 1010 may be configured to perform an action that is of sending to a network device or receiving from the network device by the network device and that is described in the foregoing methods. For details, refer to the descriptions in the foregoing methods. Details are not described herein again.

Optionally, the network device 1000 may further include a power supply, configured to supply power to various devices or circuits in the network device.

In the terminal device shown in FIG. 9 and the network device shown in FIG. 10, the processor and the memory may be combined into one processing apparatus, and the processor is configured to execute program code stored in the memory to implement the foregoing functions. During specific implementation, the memory may alternatively be integrated into the processor, or may be independent of the processor. The processor may correspond to the processing unit in FIG. 8. The transceiver may correspond to the transceiver unit in FIG. 8. The transceiver may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general purpose processor may be a microprocessor or any conventional processor or the like. The steps of the methods with reference to this application may be directly performed and completed by a hardware processor, or may be performed and completed by a combination of hardware and software modules in the processor.

In this application, the memory may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in the form of instructions or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in this application, this application further provides a computer program product. The computer program product includes computer program code, and when the computer program code is executed by one or more processors, an apparatus including the processor is enabled to perform the methods shown in FIG. 4 and FIG. 7.

All or some of the technical solutions in this application may be implemented by using software, hardware, firmware, or any combination thereof. When software is used to implement embodiments, all or a part of embodiments may be implemented in the form of a computer program product. The computer program product includes one or more computer instructions. When the computer program instructions are loaded and executed on a computer, the procedure or functions according to this application are all or partially generated. The foregoing computer instructions may be stored in a computer-readable storage medium, or may be transmitted from a computer-readable storage medium to another computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in this application, this application further provides a computer-readable storage medium. The computer-readable storage medium stores program code, and when the program code is run by one or more processors, an apparatus including the processor is enabled to perform the methods shown in FIG. 4 and FIG. 7.

According to the methods provided in this application, this application further provides a system, including the foregoing apparatus configured to implement the methods of the terminal device and the foregoing at least one apparatus configured to implement the methods of the network device.

In several embodiments provided in this application, it should be understood that the disclosed systems, apparatuses, and methods may be implemented in another manner. For example, the described apparatuses are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a network device, wherein the first information is used to configure M communication parameter groups corresponding to N candidate carriers, N is an integer greater than or equal to 1, and M is greater than or equal to N;
receiving second information from the network device, wherein the second information indicates at least one communication parameter group in the M communication parameter groups; and
performing communication on at least one carrier based on the at least one communication parameter group, wherein the N candidate carriers comprise the at least one carrier.

2. The method according to claim 1, wherein the N candidate carriers belong to K frequency bands, and K is a positive integer; and
a union set of parameter values of one communication parameter in the M communication parameter groups is greater than a maximum value of the one communication parameter supported by a terminal device in the K frequency bands; and/or
a union set of parameter values of the one communication parameter in the at least one communication parameter group is less than or equal to the maximum value of the one communication parameter supported by the terminal device in the K frequency bands.

3. The method according to claim 1 or 2, wherein the method further comprises:
sending third information to the network device, wherein the third information indicates a maximum value of at least one communication parameter supported by the terminal device in the K frequency bands, and the communication parameter group comprises the at least one communication parameter.

4. The method according to any one of claims 1 to 3, wherein the communication parameter group comprises one or more of the following communication parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

5. The method according to any one of claims 1 to 4, wherein
the second information comprises at least one piece of indication information, and one piece of indication information indicates one communication parameter group corresponding to one carrier in the at least one carrier.

6. The method according to claim 5, wherein
the at least one piece of indication information comprises first indication information, and the first indication information indicates a first communication parameter group corresponding to a first carrier in the at least one carrier; and
the performing communication on at least one carrier based on the at least one communication parameter group comprises:
performing communication on one or more BWPs of the first carrier based on the first communication parameter group.

7. The method according to claim 5, wherein one communication parameter group is a communication parameter group corresponding to one BWP of one candidate carrier, the at least one piece of indication information comprises first indication information, the first indication information indicates a first communication parameter group, and the first communication parameter group is a communication parameter group corresponding to a first BWP of a first carrier in the at least one carrier; and
the performing communication on at least one carrier based on the at least one communication parameter group comprises:
performing communication on the first BWP based on the first communication parameter group.

8. The method according to any one of claims 1 to 7, wherein the first information is used to configure a plurality of communication modes, and the plurality of communication modes comprise one or more of a non-coherent joint transmission communication mode, a carrier aggregation communication mode, or a coherent joint transmission communication mode; and
the M communication parameter groups are communication parameter groups corresponding to the N candidate carriers used in the plurality of communication modes.

9. The method according to any one of claims 1 to 8, wherein the second information indicates a first communication mode, and the at least one carrier is a carrier used in the first communication mode; and
the performing communication on at least one carrier based on the at least one communication parameter group comprises:
performing communication in the first communication mode based on the at least one communication parameter group.

10. The method according to any one of claims 1 to 9, wherein the first information is carried in a radio resource control RRC message, and the second information is carried in a medium access control MAC control element CE or downlink control information DCI.

11. A communication method, comprising:
sending first information to a terminal device, wherein the first information is used to configure M communication parameter groups of N candidate carriers, N is an integer greater than or equal to 1, and M is greater than or equal to N; and
sending second information to the terminal device, wherein the second information indicates at least one communication parameter group, and the at least one communication parameter group is a communication parameter group corresponding to at least one carrier in the N candidate carriers.

12. The method according to claim 11, wherein the N candidate carriers belong to K frequency bands, and K is a positive integer; and
a union set of parameter values of one communication parameter in the M communication parameter groups is greater than a maximum value of the one communication parameter supported by the terminal device in the K frequency bands; and/or
a union set of parameter values of the one communication parameter in the at least one communication parameter group is less than or equal to the maximum value of the one communication parameter supported by the terminal device in the K frequency bands.

13. The method according to claim 11 or 12, wherein the method further comprises:
receiving third information from the terminal device, wherein the third information indicates a maximum value of at least one communication parameter supported by the terminal device in the K frequency bands, and the communication parameter group comprises the at least one communication parameter.

14. The method according to any one of claims 11 to 13, wherein the communication parameter group comprises one or more of the following communication parameters:
a quantity of control resource set pools, a maximum quantity of physical downlink shared channels PDSCHs transmitted in each time unit, a maximum quantity of physical uplink shared channels PUSCHs transmitted in each time unit, a maximum quantity of transport layers of a shared channel, or a quantity of transmission configuration indicator TCI states.

15. The method according to any one of claims 11 to 14, wherein the second information comprises at least one piece of indication information, and one piece of indication information indicates one communication parameter group corresponding to one carrier in the at least one carrier.

16. The method according to claim 14, wherein one communication parameter group is a communication parameter group corresponding to one BWP of one candidate carrier, the at least one piece of indication information comprises first indication information, the first indication information indicates a first communication parameter group, and the first communication parameter group is a communication parameter group corresponding to a first BWP of a first carrier in the at least one carrier.

17. The method according to any one of claims 11 to 16, wherein the first information is used to configure a plurality of communication modes, and the plurality of communication modes comprise one or more of a non-coherent joint transmission communication mode, a carrier aggregation communication mode, or a coherent joint transmission communication mode; and
the M communication parameter groups are communication parameter groups corresponding to the N candidate carriers used in the plurality of communication modes.

18. The method according to any one of claims 11 to 17, wherein the second information indicates a first communication mode, and the at least one carrier is a carrier used in the first communication mode.

19. The method according to any one of claims 11 to 18, wherein the first information is carried in a radio resource control RRC message, and the second information is carried in a medium access control MAC control element CE or downlink control information DCI.

20. A communication apparatus, comprising:
a unit or module configured to perform the method according to any one of claims 1 to 10; or
a unit or module configured to perform the method according to any one of claims 11 to 19.

21. A communication apparatus, comprising a processor and a memory, wherein the memory is coupled to the processor, and the processor is configured to perform the method according to any one of claims 1 to 10 or the method according to any one of claims 11 to 19.

22. A computer-readable storage medium, storing instructions, wherein when the instructions are run on a computer, the computer is enabled to perform the method according to any one of claims 1 to 10 or the method according to any one of claims 11 to 19.

23. A computer program product, comprising instructions, wherein when the instructions are run on a computer, the computer is enabled to perform the method according to any one of claims 1 to 10 or the method according to any one of claims 11 to 19.
